# EUROPEAN PATENT APPLICATION

(11) **EP 3 699 847 A1**
(43) Date of publication of application: **26.08.2020**
(21) Application number: 19158930.8
(22) Date of filing: 22.02.2019
(51) Int. Cl.: G06Q 20/02, G06Q 20/38, G06Q 20/20, G06Q 20/40

(54) **TRANSACTION SYSTEM DATA MANAGEMENT**

(71) Applicant: Mastercard International Incorporated, Purchase NY 10577 (US)
(72) Inventor: MAIN, Jonathan James, Hook, RG29 1NZ (GB); ROBERTS, David Anthony, Warrington, Cheshire WA4 5RD (GB); CHEN, Kuan Hua, London, KT2 5DT (GB); MESTRE, Patrick, 5330 Sart-Bernard (BE)
(74) Representative: Lawrence, Richard Anthony

(57) **Abstract**

A transaction takes place between a first device and a second device. There is an authorisation system associated with the first device and a transaction support system associated with the second device. The transaction support system and the authorisation system are connected by a transaction infrastructure. A communication path is provided between the second device and the transaction support system. The second device is adapted to take the following actions. It performs a transaction with the first device and receives and generates transaction data. It splits the transaction data into basic transaction data and enhanced transaction data. It provides the basic transaction data to the transaction support system over the communication path - this enables the transaction support system to process the basic transaction data and provide a processed transaction to the authorisation system over the transaction infrastructure. It also provides the enhanced transaction data by a separate route to the authorisation system for reconciliation with the processed transaction provided by the transaction support system for use by the authorisation system in authorising the transaction.

## Description

### TECHNICAL FIELD

The present disclosure relates to methods and apparatus for transaction system data management. In particular, the present disclosure relates to enabling rich data flow over a constrained transaction system infrastructure.

### BACKGROUND

Payment cards such as credit cards and debit cards are very widely used for all forms of financial transaction. The use of payment cards has evolved significantly with technological developments over recent years. Originally, transactions were on paper, using an imprint of a transaction card and confirmed by a signature. This approach was largely replaced by use of a magnetic stripe of a transaction card swiped through a magnetic stripe reader on a point of sale (POS) terminal to perform a transaction. Transaction cards developed to contain an integrated circuit ("chip cards" or "smart cards") that communicates with a smart card reader in the POS terminal. Using this approach, a transaction is typically confirmed by a personal identification number (PIN) entered by the card user. Cards of this type typically operate under the EMV® specification for interoperation of chip cards and associated apparatus (such as POS terminals and ATMs). For contact communications the EMV specifications are based on the ISO/IEC 7816 standards for operation of cards of this type. Contactless payments are now possible between suitably enabled payment cards or devices and merchant terminals by short range wireless technology proximity protocols, and the EMV specifications implement contactless communication based on the the ISO/IEC 14443 standard. Payment cards and devices are provided under a transaction scheme (such as Mastercard, American Express or Visa) and the transaction mechanism is mediated by the transaction scheme infrastructure.

EMV chip specifications relate to contact and contactless payment protocols and are publicly available at the EMVCo website (EMVCo is the industry body tasked with maintaining these specifications with the support of major transaction scheme providers) - https://www.emvco.com/document-search/ - and would readily be consulted by the person skilled in the art. Terminology relating to EMV technology not expressly defined in this document is referenced and defined in EMV specifications, as will be appreciated by the person skilled in the art.

A transaction scheme or payment card scheme - involving a payment network linked to a payment card - is typically based one of two models: a three-party model (adopted by American Express) or a four-party model (adopted by Visa and Mastercard). The relevant parties in the four-party model include a merchant, an acquirer, an issuer and a cardholder. Typically, the four party model of a credit card or debit card purchase involves an exchange of authorisation request and response messages between the parties prior to the settlement of funds between the cardholder and the merchant. The messages may include transaction data such as a primary account number, a transaction amount, a merchant identifier, and a date and time of the transaction.

Merchant terminals are connected to the acquirer (acquiring bank) supporting the merchant. A transaction is routed to the acquirer from the merchant, and then through the transaction system network provided by the payment scheme provider to the issuer (issuing bank) for the consumer (cardholder). The issuer uses transaction information and its knowledge of the cardholder to determine whether to authorise the transaction, with an authorisation result being routed back through the transaction system infrastructure to the merchant.

Protocols for performing and processing transactions using payment schemes of this type are defined by payment schemes or in some cases by national bodies, with these being typically based on ISO 8583 or its replacement ISO 20022. EMV specifications enable common implementations of such protocols according to specifications developed in connection with EMVCo, with specifications being publicly available as indicated above. It is desirable for many purposes - fraud detection, issuer authorisation decisions, additional services provided by the payment scheme provider - for rich transaction information to be provided to the payment scheme provider and particularly to the issuer. Existing EMVCo standards are adapted for limited or low bandwidth connections, particularly between merchant and acquirer, and are not adapted for data flows providing rich transaction-related data. Standards can be adapted to allow richer data flows, but this does not address the issue that existing connections have been developed with current standards in mind. In particular, the connection between a merchant terminal and an acquirer may be adapted to provide currently mandated transaction data to the acquirer according to particular requirements, and the cost or effort of changing and testing the necessary interfaces may be a deterrent to adoption. In particular, such interfaces may be designed for lower speed connections and may not be able to process or route more extensive transaction data in an acceptable time.

The present disclosure has been devised to mitigate or overcome at least some of the above-mentioned problems.

### SUMMARY OF THE DISCLOSURE

According to a first aspect of the present disclosure there is provided a method of providing a transaction for authorisation over a transaction infrastructure, wherein the transaction takes place between a first device and a second device, wherein the transaction has an authorisation system associated with the first device and a transaction support system associated with the second device, wherein the transaction support system and the authorisation system are connected by the transaction infrastructure, and wherein a communication path is provided between the second device and the transaction support system, the method comprising the second device: performing a transaction with the first device and receiving and generating transaction data; splitting the transaction data into basic transaction data and enhanced transaction data; providing the basic transaction data to the transaction support system over the communication path, thereby enabling the transaction support system to process the basic transaction data and provide a processed transaction to the authorisation system over the transaction infrastructure; and providing the enhanced transaction data by a separate route to the authorisation system for reconciliation with the processed transaction provided by the transaction support system for use by the authorisation system in authorising the transaction.

In embodiments, the basic transaction data comprises transaction data as generated under a first transaction protocol, and wherein the transaction is performed under a second, updated, transaction protocol, wherein the enhanced transaction data comprises transaction data provided by the second transaction protocol but not by the first transaction protocol. This approach is relevant whenever the transaction support system is only capable of handling the first transaction protocol, and is particularly relevant in situations when the transaction support system has not been upgraded to handle a new generation of the transaction protocol but the transaction infrastructure and other associated elements have been upgraded.

The first device may be a payment device and the authorisation system associated with a payment device issuing bank. The second device may be a merchant terminal and the transaction support system associated with an acquirer bank for the merchant terminal. In such a case, the first and second transaction protocols may be EMV protocols.

The separate route may enable reconciliation to take place at the transaction infrastructure or at the authorisation system.

In a second aspect, the disclosure provides a terminal device adapted to provide a transaction for authorisation over a transaction infrastructure, wherein the transaction takes place between a first device and the terminal device, wherein there is an authorisation system associated with the first device and a transaction support system associated with the terminal device and the the transaction support system and the authorisation system are connected by the transaction infrastructure, and wherein there is a communication path between the terminal device and the transaction support system, wherein the terminal device is adapted to: perform a transaction with the first device and receive and generate transaction data; split the transaction data into basic transaction data and enhanced transaction data; provide the basic transaction data to the transaction support system over the communication path, thereby enabling the transaction support system to process the basic transaction data and provide a processed transaction to the authorisation system over the transaction infrastructure; and provide the enhanced transaction data by a separate route to the authorisation system for reconciliation with the processed transaction provided by the transaction support system for use by the authorisation system in authorising the transaction.

In embodiments, the basic transaction data may comprise transaction data as generated under a first transaction protocol, wherein the terminal device is adapted to perform the transaction under a second, updated, transaction protocol, wherein the enhanced transaction data comprises transaction data provided by the second transaction protocol but not by the first transaction protocol.

The first device may be a payment device and the authorisation system associated with a payment device issuing bank. The terminal device may be a merchant terminal and the transaction support system associated with an acquirer bank for the merchant terminal. In such a case, the first and second transaction protocols may be EMV protocols.

The separate route may enable reconciliation to take place at the transaction infrastructure or at the authorisation system.

In a third aspect, the disclosure provides a method of authorising a transaction received over a transaction infrastructure at an authorisation system, wherein the transaction takes place between a first device and a second device, wherein the authorisation system is associated with the first device and a transaction support system associated with the second device, wherein the transaction support system and the authorisation system are connected by the transaction infrastructure, wherein the first and second device have performed the transaction and the second device has provided basic transaction data to the transaction support system, the method comprising: receiving and reconciling enhanced transaction data from the second device with basic transaction data from a processed transaction received from the transaction support system over the transaction infrastructure; and using the reconciled basic transaction data and enhanced transaction data to make an authorisation decision.

### BRIEF DESCRIPTION OF THE DRAWINGS

One or more embodiments of the disclosure will now be described, by way of example only, with reference to the accompanying drawings, in which:
Figure 1 shows schematically a transaction system using the four-party model;
Figure 2 shows an implementation of the transaction system of Figure 1 adapted for performing embodiments of the disclosure;
Figure 3 shows schematically the passage of data during authorisation of a transaction in the transaction system of Figure 2 as conventionally implemented;
Figure 4 shows schematically the passage of data during authorisation of a transaction in a transaction system as shown in Figure 2 in accordance with a first embodiment of the disclosure;
Figure 5 shows schematically the passage of data during authorisation of a transaction in a transaction system as shown in Figure 2 in accordance with a first embodiment of the disclosure; and
Figure 6 illustrates an overall approach to implementing embodiments of the disclosure.

### DETAILED DESCRIPTION

General and specific embodiments of the disclosure will be described below with reference to the Figures.

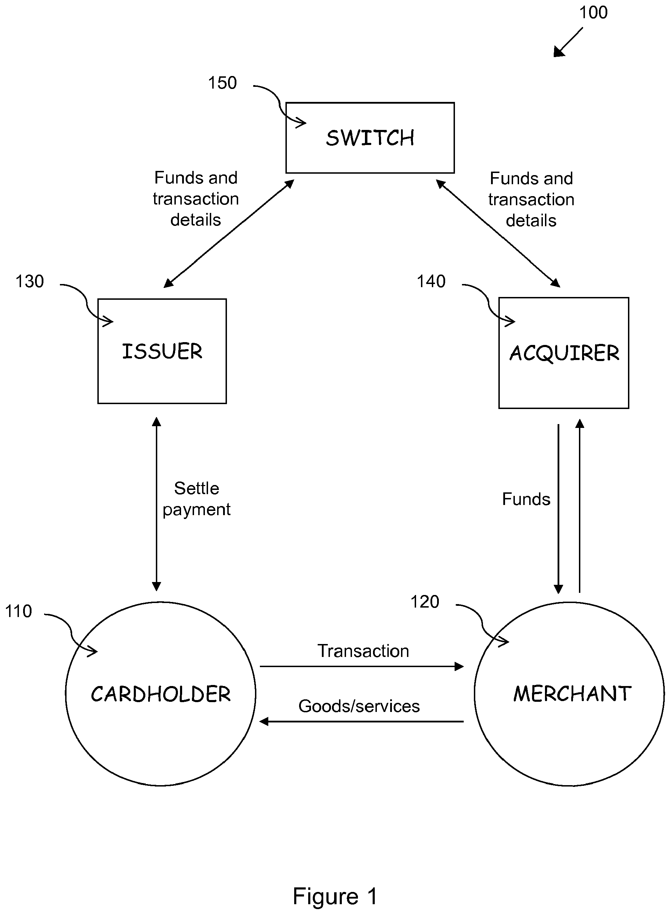

Figure 1 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. Should the transaction be considered abnormal by the issuer 130, the cardholder 110 may be required to undergo an additional verification process to verify their identity and the details of the transaction. Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

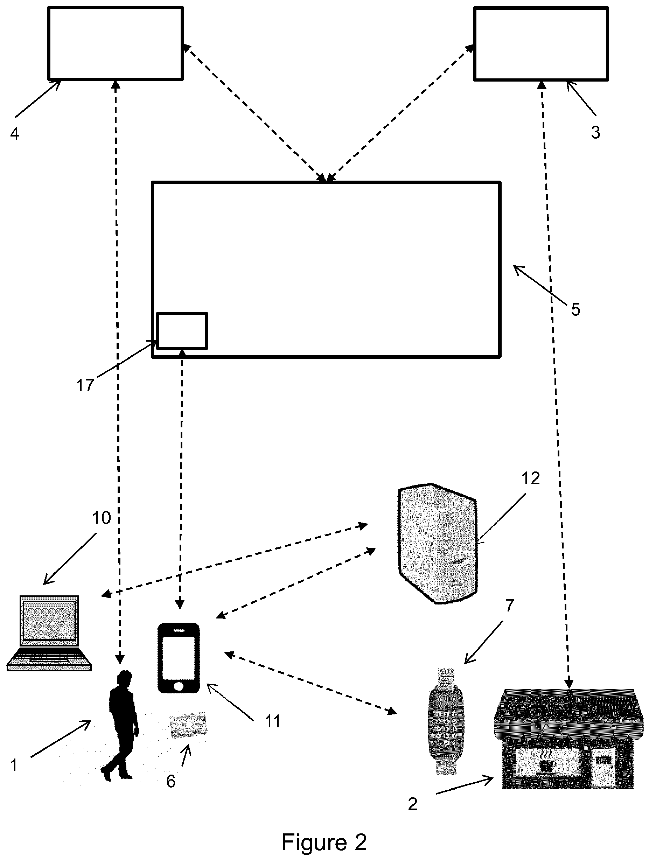

Figure 2 shows an architecture according to an embodiment of the disclosure appropriate for interaction between a cardholder and a merchant.

The cardholder 1 uses their computing device - which may be any or all of a cellular telephone handset, a tablet, a laptop, a static personal computer or any other suitable computing device (here a cellular telephone handset or smartphone 11 is shown) - to act either as a proxy for a physical payment card 6 or as a virtual payment card operating only in a digital domain. The smartphone 11 achieves this with a mobile payment application and typically a digital wallet. The smart phone 11 is thus able to transact with a merchant POS terminal 7 using NFC or another contactless technology. The smartphone 11 may also be able to interact with a merchant server 12 representing the merchant 2 over any appropriate network connection, such as the public internet. An alternative computing device - laptop computer 10 - is also shown, interacting with the merchant server 12 over the public internet.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device. Other elements may be present to support digital domain transactions - for example, an internet gateway for a merchant server and a tokenisation provider for tokenising digital cards and an associated digital enablement service - but a main consideration in embodiments of the disclosure is the handling of transactions between a card or other cardholder payment device and a terminal, as the terminal to acquirer connection is under particular consideration. This may have limited ability to carry additional data, or may only be adapted for handling of transaction data according to legacy protocols rather than by current protocols - in particular, an existing terminal to acquirer connection may not be suitable to handle additional information beyond that provided in a conventional EMVCo protocol transaction.

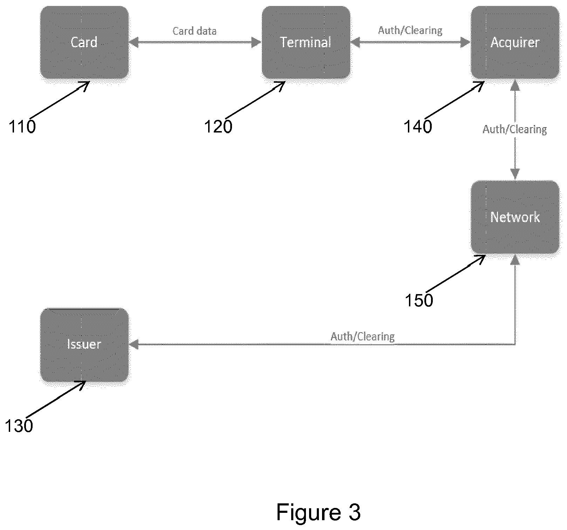

The path of such a conventional transaction (here termed "conventional EMV" or "1^{st} Gen") is shown in Figure 3. The Cardholder 110 (here represented by the card) transacts with the Merchant 120 (here represented by the terminal), with card data transmitted from card to terminal according to existing 1^{st} Gen EMV protocols - this card data is stored in Data Element 55, with a composition defined by EMV protocols. The transaction including this card data is prepared at the terminal according to 1^{st} Gen protocols and transmitted to the Acquirer 140 for authorisation. The Acquirer 140 submits the transaction to the transaction scheme Network (or Switch) 150 for routing to the Issuer 130 for authorisation (and for any additional processing required in the transaction system). The Issuer 130 receives the transaction including the 1^{st} Gen card data, makes an authorisation decision, and this decision is then passed back through the Network 150 and the Acquirer 140 to the Merchant 120, who releases goods or services to the client when the transaction is authorised.

Over time, it is desirable for transaction protocols to develop to allow new transaction modes to develop and to improve transaction security. Improvement of transaction security may involve more secure information transmission, better fraud detection and more effective authorisation decisions. To achieve better authorisation decisions, an issuer needs better information. While some of this information may relate to historical information about the behaviour of the cardholder, a valuable source of additional information may be the card (or payment device), or even the terminal, as these may be able to provide additional information relating to the circumstances of the transaction and the transaction environment that may be of value to the issuer in making such a decision. However, taking this approach would require more information to be provided with a transaction to be authorised.

This approach is taken in EMV "2^{nd} Generation" protocols - these provide enhanced transaction information relating to the transaction environment that can be used by the issuer in making authorisation decisions. The result is a richer set of card data to be provided with transaction data, for example the consumer location at the time of the transaction and information about enhanced cardholder verification methods.

Use of 2^{nd} Generation protocols may require more than the card (or payment device) and the terminal being able to provide this information in transaction data and the issuer being adapted to understand and use this information. Transaction systems are complex and it is typically not practical to upgrade every part of such a system at one time - particularly when not all parts of the system are under common control. In this case, the scheme provider may have control of the Switch 150 and will typically provide services to the Issuer 130, it will not have control of the Merchant 120 or Acquirer 140 systems. Updating the terminal of the Merchant 120 to new protocols will typically not be a complex task. However, upgrading Acquirer 140 systems may not be straightforward, and may lag upgrades elsewhere in the system (particularly as there may be little direct benefit for the Acquirer 140 in such upgrades). However, as the Acquirer 140 is a conduit for transaction data in the authorisation process, this causes a practical difficulty - if the Acquirer is not adapted to receive 2^{nd} Generation protocol data, it will only receive 1^{st} Generation protocol data, and the Issuer would be deprived of 2^{nd} Generation information.

In embodiments of the disclosure, this issue is addressed by providing only 1^{st} Generation protocol data to the Acquirer 140, while separately providing 2^{nd} Generation data to the Issuer 130. This enables the Issuer 130 to use 2^{nd} Generation data for an authorisation decision.

For 2^{nd} Generation data to be provided during a transaction, both the card (or payment device) and the terminal will need to support 2^{nd} Generation protocols. These will not be discussed further here, save to note that after the interactions between the card and the terminal, the terminal will have a transaction ready to send for authorisation with 2^{nd} Generation transaction data. In embodiments of the disclosure, the terminal is not only upgraded to support 2^{nd} Generation protocols, it is also provided with a secondary communication path for routing of 2^{nd} Generation data so that it can be used by the Issuer 130 in authorisation processes.

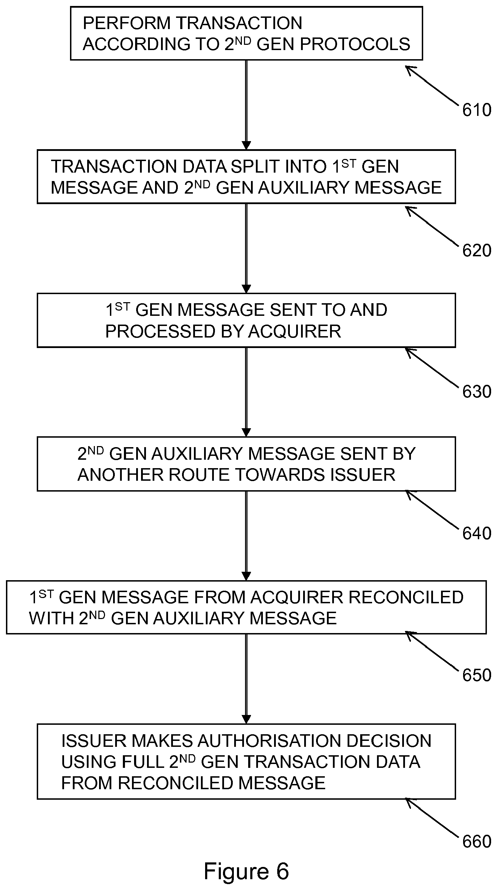

The overall approach taken is shown in Figure 6. First of all, the card and the terminal determine that they both support 2^{nd} Gen EMV protocols and perform a transaction 610 according to these protocols. The terminal is aware that its acquirer system does not support 2^{nd} Gen EMV protocols, so splits the transaction data 620 into a 1^{st} Gen transaction message and a 2^{nd} Gen auxiliary transaction message. The 1^{st} Gen transaction message is sent 630 to the acquirer and processed by the acquirer in exactly the same way as any other 1^{st} Gen message, and is provided as a transaction for authorisation to the network for authorisation in the conventional way. The 2^{nd} Gen auxiliary transaction message is sent 640 by another route for reconciliation 650 with the transaction for authorisation so that the issuer conducts authorisation 660 on the reconciled messages which form a full 2^{nd} Gen transaction for authorisation, so the issuer is able to use the full set of 2^{nd} Gen transaction data for making an authorisation decision.

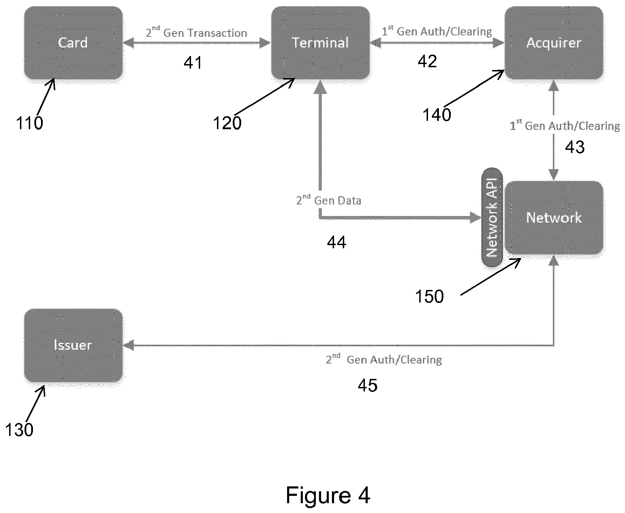

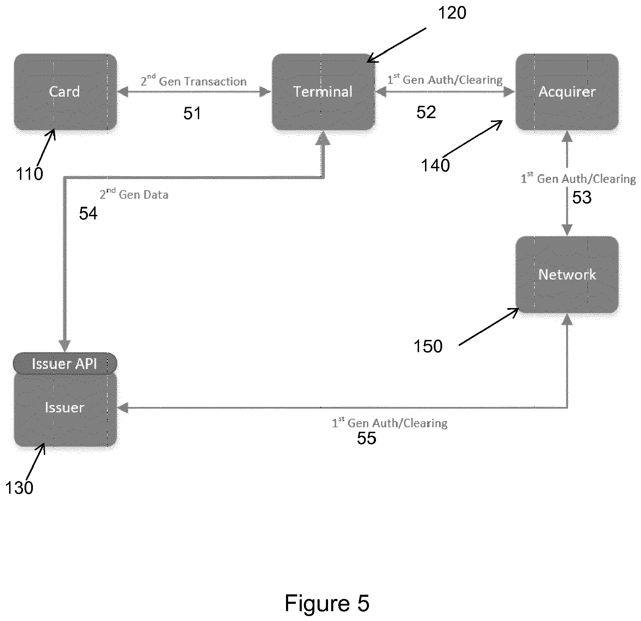

Two embodiments of this approach are described with reference to Figures 4 and 5 respectively.

In the first option, shown in Figure 4, a Network API 155 is provided at the Network 150, and the Terminal 120 is programmed to split the 2^{nd} Gen transaction data developed and received at the Terminal 120 following a 2^{nd} Gen transaction 41 into a conventional 1^{st} Gen Authorisation/Clearing message 42 to be sent to the (unupgraded) Acquirer 140 and a 2^{nd} Gen auxiliary message 44 to be sent to the Network 150 using the Network API 155. The Acquirer 140 processes the message in the conventional way for a 1^{st} Gen transaction, and provides a standard 1^{st} Gen Authorisation/Clearing message 43 for routing to the Issuer 130 by the Network 150. The Network 150 however first reconciles the 1^{st} Gen Authorisation/Clearing message 43 from the Acquirer 140 with the 2^{nd} Gen auxiliary message 44 from the Terminal 120 to create a reconciled 2^{nd} Gen Authorisation/Clearing message which is sent to the Issuer 130 for authorisation. The Issuer 130 carries out the authorisation process and sends back an authorisation status message - if this is a 1^{st} Gen message (if for example there is no difference between this message in 1^{st} Gen and 2^{nd} Gen protocols), this may be sent back through the Network 150 and Acquirer 140 in the conventional manner, whereas if there is a 2^{nd} Gen component the message may be split at the Network 150 with a conventional 1^{st} Gen message and a 2^{nd} Gen auxiliary message as before. These pathways may be used for any subsequent 2^{nd} Gen process that needs to route around the Acquirer 140 because it has not been upgraded.

A second option is shown in Figure 5. In this case, the API and the reconciliation step are both associated with the Issuer 130 rather than the Network 150. While the same principles are followed, this leads to minor practical differences. The 2^{nd} Gen transaction 51 is split as before, and the 1^{st} Gen Authorisation/Clearing message 52 to the Acquirer 140 and the 1^{st} Gen Authorisation/Clearing message 53 from the Acquirer 140 to the Network 150 are as in the first embodiment, but no reconciliation takes place at the network and a conventional 1^{st} Gen Authorisation/Clearing message 55 is sent from the Network 150 to the Issuer 130. The Issuer 130 in this case provides an Issuer API 135, and the Terminal 120 is programmed when splitting the transaction data to route the 2^{nd} Gen auxiliary message 54 to the Issuer 130 through the Issuer API 135. The Issuer 130 then reconciles the conventional 1^{st} Gen Authorisation/Clearing message 55 with the 2^{nd} Gen auxiliary message 54 to recover the full 2^{nd} Gen transaction data for use by the Issuer 130 in authorisation. Processes are otherwise directly analogous to those in the first embodiment.

Upgrading the Terminal 120 to perform the splitting step is straightforward and may be done at the time of upgrading the Terminal 120 to support 2^{nd} Gen transactions - it may then simply be programmed to use this approach if its Acquirer has not been upgraded from 1^{st} Gen, and to use a conventional routing if all relevant parts of the system have been upgraded to 2^{nd} Gen. Using the first embodiment, this programming may simply indicate a routing point in the Network 150 as a destination for the 2^{nd} Gen auxiliary message. Using the second embodiment, as the Issuer 130 will not be known to the Terminal 120 until the transaction is in process (as the Issuer 130 is associated with the Cardholder 110 and not with the Terminal 120), the routing information for the 2^{nd} Gen auxiliary message may be provided as additional data within the transaction data itself. The Terminal 120 can then simply extract this routing data and use it to route the 2^{nd} Gen auxiliary message.

When sending the 1^{st} Gen Authorisation/Clearing messages 42, 52 and the 2^{nd} Gen auxiliary messages 44, 54, a mechanism is needed to ensure that the messages can be reconciled. There are a variety of possible approaches which may be used by the skilled person once it has been determined that there is a need for such a mechanism, typically using an identifier that is sufficiently close to unique that it may be reliably used during the reconciliation process without significant risk that there will be an incorrect match. Strategies for producing such an identifier for reconciliation in a different technical context (provision of electronic receipts for contactless transactions) are discussed in the applicant's earlier WO 2015/158628, the contents of which are incorporated by reference. This identifier of course needs to be already present or easily provided in the 1^{st} Gen Authorisation/Clearing message 42, 52. One approach is to use fields (such as a combination of Transaction ID and time data) from 1^{st} Gen data that have these properties - these fields may then simply be copied into the 2^{nd} Gen auxiliary message to serve as a message identifier. The reconcilation process at the Network 150 (first embodiment) or Issuer 130 (second embodiment) simply measures or determines this identifier for relevant messages, and reconciles messages when a message of each type has been received. An appropriate header or tag may be used in these messages for this purpose - in the case of the 1^{st} Gen messages, a tag may be used simply to indicate that the message is of a type that will need to be reconciled as it relates to a 2^{nd} Gen transaction.

Issuer authorisation processes are not the subject of this disclosure, and will not be discussed further here - for further information on the options available to the skilled person in authorisation using 2^{nd} Gen EMV protocols, the skilled person is directed to EMVCo specifications as referenced above.

While the approach set out above is particularly relevant to upgrading of transaction infrastructures in the migration from 1^{st} Gen to 2^{nd} Gen EMV protocols, it has broader application to any transaction infrastructure which cannot or will not be upgraded uniformly. Using this approach, information can be routed around a transaction system element that is not able to use (or even receive) the information - allowing that transaction system element to operate in exactly the same way as it did before the partial transaction infrastructure upgrade, but also allowing other transaction system elements to use the additional information to perform according to the capabilities of the upgraded transaction system.

Many modifications may be made to the above examples without departing from the scope of the present disclosure as defined in the accompanying claims.

## Claims

1. A method of providing a transaction for authorisation over a transaction infrastructure, wherein the transaction takes place between a first device and a second device, wherein the transaction has an authorisation system associated with the first device and a transaction support system associated with the second device, wherein the transaction support system and the authorisation system are connected by the transaction infrastructure, and wherein a communication path is provided between the second device and the transaction support system, the method comprising the second device:
performing a transaction with the first device and receiving and generating transaction data;
splitting the transaction data into basic transaction data and enhanced transaction data;
providing the basic transaction data to the transaction support system over the communication path, thereby enabling the transaction support system to process the basic transaction data and provide a processed transaction to the authorisation system over the transaction infrastructure; and
providing the enhanced transaction data by a separate route to the authorisation system for reconciliation with the processed transaction provided by the transaction support system for use by the authorisation system in authorising the transaction.

2. The method of claim 1, wherein the basic transaction data comprises transaction data as generated under a first transaction protocol, and wherein the transaction is performed under a second, updated, transaction protocol, wherein the enhanced transaction data comprises transaction data provided by the second transaction protocol but not by the first transaction protocol.

3. The method of claim 2, wherein the first device is a payment device and the authorisation system is associated with a payment device issuing bank.

4. The method of claim 3, wherein the second device is a merchant terminal and the transaction support system is associated with an acquirer bank for the merchant terminal.

5. The method of claim 4, wherein the first and second transaction protocols are EMV protocols.

6. The method of any preceding claim, wherein the separate route enables reconciliation to take place at the transaction infrastructure.

7. The method of any of claims 1 to 5, wherein the separate route enables reconciliation to take place at the authorisation system.

8. A terminal device adapted to provide a transaction for authorisation over a transaction infrastructure, wherein the transaction takes place between a first device and the terminal device, wherein there is an authorisation system associated with the first device and a transaction support system associated with the terminal device and the the transaction support system and the authorisation system are connected by the transaction infrastructure, and wherein there is a communication path between the terminal device and the transaction support system, wherein the terminal device is adapted to:
perform a transaction with the first device and receive and generate transaction data;
split the transaction data into basic transaction data and enhanced transaction data;
provide the basic transaction data to the transaction support system over the communication path, thereby enabling the transaction support system to process the basic transaction data and provide a processed transaction to the authorisation system over the transaction infrastructure; and
provide the enhanced transaction data by a separate route to the authorisation system for reconciliation with the processed transaction provided by the transaction support system for use by the authorisation system in authorising the transaction.

9. The terminal device of claim 8, wherein the basic transaction data comprises transaction data as generated under a first transaction protocol, and wherein the terminal device is adapted to perform the transaction under a second, updated, transaction protocol, wherein the enhanced transaction data comprises transaction data provided by the second transaction protocol but not by the first transaction protocol.

10. The terminal device of claim 9, wherein the first device is a payment device and the authorisation system is associated with a payment device issuing bank.

11. The terminal device of claim 10, wherein the terminal device is a merchant terminal and the transaction support system is associated with an acquirer bank for the merchant terminal.

12. The terminal device of claim 11, wherein the first and second transaction protocols are EMV protocols.

13. The terminal device of any of claims 8 to 12, wherein the separate route enables reconciliation to take place at the transaction infrastructure.

14. The terminal device of any of claims 8 to 12, wherein the separate route enables reconciliation to take place at the authorisation system.

15. A method of authorising a transaction received over a transaction infrastructure at an authorisation system, wherein the transaction takes place between a first device and a second device, wherein the authorisation system is associated with the first device and a transaction support system associated with the second device, wherein the transaction support system and the authorisation system are connected by the transaction infrastructure, wherein the first and second device have performed the transaction and the second device has provided basic transaction data to the transaction support system, the method comprising:
receiving and reconciling enhanced transaction data from the second device with basic transaction data from a processed transaction received from the transaction support system over the transaction infrastructure; and
using the reconciled basic transaction data and enhanced transaction data to make an authorisation decision.
